# EUROPÄISCHE PATENTSCHRIFT

(11) **EP 0 568 835 B1**
(45) Veröffentlichungstag und Bekanntmachung des Hinweises auf die Patenterteilung: **23.10.1996**
(21) Anmeldenummer: 93105846.5
(22) Anmeldetag: 08.04.1993
(51) Int. Cl.: F16L 7/00

(54) **Kompensationselement für Kunststoffmantelrohrleitungen**
Compensating element for plastic coated pipelines
Elément de compensation pour tuyauteries à enveloppe en matière plastique

(30) Priorität: 05.05.1992 DE 4214883
(43) Veröffentlichungstag der Anmeldung: 10.11.1993
(73) Patentinhaber: Witzenmann GmbH Metallschlauch-Fabrik Pforzheim, D-75175 Pforzheim (DE)
(72) Erfinder: Werner, D., Prof. Dr.-Ing., O-5300 Weimar (DE); Meyer, B., Dr.-Ing., O-5320 Apolda (DE); Berger, Peter W., W-7531 Pforzheim-Eutingen (DE); Gropp, Reinhard, W-7540 Neuenbürg-Arnbach (DE); Weis, Christoph, W-7500 Karlsruhe 1 (DE)
(74) Vertreter: Lemcke, Rupert, Dipl.-Ing.

(56) Entgegenhaltungen:
- DE-A- 3 934 256
- DE-C- 438 654
- US-A- 4 519 634

## Beschreibung

Die Erfindung betrifft ein Kompensationselement für Kunststoffmantelrohrleitungen zur Aufnahme von wärmedehnungsbedingten Längenänderungen und Richtungsänderungen bei vorzugsweise erdverlegten, insbesondere nicht biegbaren Mantelrohrleitungen, wobei das Kompensationselement aus einem biegbaren, einen Dehnraum umfassenden Hüllrohr, einem darin radial und axial beweglich gelagerten, biegbaren Mediumrohr sowie Endstücken besteht und wobei das Mediumrohr mit einer Wärmedämmschicht umgeben und/oder das Hüllrohr mit einer Wärmedämmschicht ausgekleidet ist.

Kompensationselemente als Rohrleitungsverbindungen sind durch die DE-OS 39 34 256 bekannt. Dabei erfolgt die Lagerung des Mediumrohres innerhalb des Hüllrohres über Federanordnungen, die jedoch bei wärmebedingten Auslenkungen des Mediumrohres erhebliche Rückstellkräfte auf das Mediumrohr ausüben. Denn die symmetrisch um das Mediumrohr verteilte Federanordnung soll einerseits das Mediumrohr zentrieren und zusammen mit dem darin enthaltenen Medium in Vertikalrichtung abstützen, wozu verhältnismäßig harte Federn erforderlich sind, während die Federn auf der anderen Seite weich sein sollen, um das Mediumrohr nicht bei wärmedehnungsbedingten Bewegungen zu behindern. Damit liegen widersprüchliche, allenfalls kompromißweiselösbare Anforderungen vor. Außerdem führt die bekannte Federlagerung zu einer verhältnismäßig teuren Installation.

Aufgabe der Erfindung ist es daher, ein Kompensationselement der eingangs genannten Art derart auszubilden, daß einerseits eine genügende Abstützung in Vertikalrichtung gegeben ist, andererseits jedoch das Mediumrohr ohne nennenswerte Rückstellkräfte seine wärmedehnungsbedingten Bewegungen ausführen kann.

Diese Aufgabe ist erfindungsgemäß dadurch gelöst, daß das biegbare Mediumrohr nur über seine weitgehend starren Endstücke gegenüber dem Hüllrohr mit seinen Endstücken radial und angular festgelegt ist, und daß das Mediumrohr im Bereich zwischen diesen Endstücken zumindest in einer Radialrichtung ungehindert innerhalb des Hüllrohres beweglich ist.

Durch diese erfindungsgemäßen Maßnahmen sind dem Mediumrohr die notwendigen Bewegungsmöglichkeiten innerhalb des Hüllrohres freigegeben, so daß es insbesondere auch erst auf der Baustelle in die jeweils erforderliche Lage gebogen werden kann, wobei außerdem eine ausreichende Halterung und Führung des Mediumrohres über seine Endstücke sichergestellt ist. Damit unterliegt das Mediumrohr innerhalb des Hüllrohres keinen Zwängen, die es an den notwendigen, wärmedehnungsbedingten Bewegungen unter Aufbau einer Rückstellkraft hindern. Andererseits können aber ohne weiteres Maßnahmen getroffen werden, um das Mediumrohr bezüglich seiner wärmedehnungsbedingten Bewegungen in bestimmter Richtung zu führen und zu unterstützen.

In an sich bekannter Weise kann das Mediumrohr mit einer Axialabstützung versehen sein, die zweckmäßigerweise aus einer Geflechtsummantelung des Mediumrohres besteht.

Als vorteilhaft hat es sich erwiesen, die Anordnung so zu treffen, daß bei im Bogen oder S-förmig verlegtem Kompensationselement bei dessen kaltem Zustand das Mediumrohr unter Zwischenlage der Wärmedämmschicht am jeweiligen Innenbogen des Hüllrohres wenigstens praktisch in Anlage ist. Damit ist dafür Sorge getragen, daß dem Mediumrohr für wärmedehnungsbedingte Bewegungen der maximale, innerhalb des Hüllrohrs gegebene Bewegungsspielraum zur Verfügung steht.

Eine andere Möglichkeit kann darin bestehen, daß die Wärmedämmschicht des Mediumrohres bzw. des Hüllrohres mit einem Verschleißschutz gegenüber dem benachbarten Bauteil versehen ist. Auf diese Weise ist die freie Bewegbarkeit des Mediumrohres innerhalb des Hüllrohres gegeben, ohne daß dabei auch über längere Betriebszeit eine Beeinträchtigung oder Abnutzung der Wärmedämmschicht eintreten kann.

Hierbei ist es vorteilhaft, wenn der Verschleißschutz eine auf die Wärmedämmschicht aufgebrachte bzw. in diese eingesetzte Schraubengangwendel aus Metall oder Kunststoff ist. Eine solche Wendel übernimmt dann den Abriebschutz gegenüber dem jeweils benachbarten Bauteil. Hier kann es vorteilhaft sein, daß die Wendel an Stellen der Berührung zwischen Mediumrohr und Hüllrohr enger gewickelt ist als über ihren weiteren Längenbereich, um an dieser Stelle eine besondere Schutzwirkung entfalten zu können.

Es kann jedoch auch vorgesehen sein, daß die Wärmedämmschicht des Hüllrohres bzw. des Mediumrohres durch schuppenförmig miteinander in Eingriff befindliche Ringe gebildet ist, und daß die Ringe an ihrer dem benachbarten Bauteil zugewandten Oberfläche mit einem Verschleißschutz ausgestattet sind.

Eine weitere Möglichkeit nach der Erfindung besteht darin, daß das Mediumrohr in Radialrichtung eines Bogens des Kompensationselementes bzw. des Hüllrohres geführt beweglich ist. Auf diese Weise ist die freie Beweglichkeit des Mediumrohres in eine bestimmte Richtung gelenkt, und zwar in die Richtung, in der für das Mediumrohr innerhalb des Hüllrohres der maximale Bewegungsspielraum zur Verfügung steht.

Dabei kann vorgesehen sein, daß auf das Mediumrohr wenigstens ein Kulissenteil im Bereich des Scheitels eines Hüllrohrbogens aufgesetzt ist, welches in einer Kulisse gleitend geführt ist, die durch einen in das Hüllrohr eingesetzten Bügel mit in Radialrichtung des Bogens gehenden Schenkeln gebildet ist. Auf diese Weise ist das Mediumrohr an Ausweichbewegungen quer zu der innerhalb des Hüllrohres maximal gegebenen Bewegungsfreiheit gehindert, so daß es wärmedehnungsbedingten Verlagerungstendenzen in optimaler Weise folgen kann, ohne daß sich dabei irgendwelche Rückstellkräfte aufbauen.

Eine andere Möglichkeit in dieser Richtung besteht darin, daß das Mediumrohr gegebenenfalls zusammen mit der es umhüllenden Wärmedämmung auf einer in das Hüllrohr eingesetzten Auflage mit Gleitfläche in Radialrichtung eines Bogens verschiebbar gelagert ist.

Auch kann zum gleichen Zwecke vorgesehen sein, daß in das Hüllrohr wenigstens im Bereich eines Bogens ein Kulissenteil eingesetzt ist, über dessen in Radialrichtung des Bogens gerichtete Kanten das Mediumrohr gleitend geführt ist.

Ferner besteht zum gleichen Zweck die Möglichkeit, daß am Mediumrohr über dessen Längserstreckung nur in der Biegeebene biegbare Streifen aus Metall oder dergleichen vorzugsweise auf beiden Seiten des Mediumrohres befestigt sind. Solche Streifen tragen und führen das Mediumrohr und verhindern dadurch dessen wärmedehnungsbedingtes Ausweichen in eine von der Biegeebene abweichenden Richtung.

Es besteht ferner die Möglichkeit, daß auf das Mediumrohr bzw. in das Hüllrohr wenigstens im Bereich des Scheitels eines Bogens eine radial gerichtete Distanzscheibe aus verschleißfestem Material mit die Wärmedämmschicht überbrückender radialer Erstreckung eingesetzt ist. Eine solche Distanzscheibe stützt die benachbarten, gegeneinander beweglichen Bauteile unter Schonung der zwischengelagerten Wärmedämmschicht ab. Dabei kann es vorteilhaft sein, daß um die Distanzscheibe noch ein Kontaktring drehbar angeordnet ist, um in Umfangsrichtung von Hüllrohr bzw. Mediumrohr sich aufbauenden Klemmkräften bei der wärmedehnungsbedingten Bewegung des Mediumrohres entgegenzuwirken.

Für alle vorstehend diskutierten Bauformen kann vorgesehen sein, daß das Hüllrohr im Bereich eines Bogens einen ovalen Querschnitt mit Lage der größeren Querschnittsachse in Radialrichtung des Bogens aufweist. Hiermit ist eine Platz- und Materialreduzierung des Kompensationselementes erreicht, ohne daß die notwendige bzw. optimale, wärmedehnungsbedingte Bewegungsfreiheit des Mediumrohres eingeschränkt wäre.

Außerdem ist es für alle in Rede stehenden Bauformen zweckmäßig, daß das jeweilige Endstück des Mediumrohres ein Kunststoffmantelrohrstück ist mit einem inneren Stahlrohr, einer dieses umgebenden Wärmedämmschicht aus Verbundschaum und einem äußeren Kunststoffmantel, damit der Anschluß an die weiterführenden Leitungen ohne besondere Probleme erfolgen kann.

Beim Gegenstand der Erfindung können weitere Schwierigkeiten für die Endstücke des Mediumrohres entstehen, die sich aus dem betriebsbedingten Bewegungsverhalten des Kompensationselementes zusammen mit den angeschlossenen, weiterführenden Rohrleitungen und aus dem schon erwähnten Biegen des Kompensationselementes zu einem Bogen bzw. zu einem S-förmigen Verlauf ergeben. Das Biegen erfolgt beispielsweise so, daß in die Stahlrohre der Endstücke des Mediumrohres eine Handhabe eingesteckt wird, über die dann das Kompensationselement gebogen wird. Hierbei ergibt sich ein Kraftfluß ausgehend vom Stahlrohr des Endstückes über die dieses umgebende Wärmedämmschicht bis zur Abstützung durch den äußeren Kunststoffmantel bzw. dessen Führung im zugeordneten Endstück des Hüllrohres, die durch die Wärmedämmschicht aus Verbundschaum oder dergleichen nicht unbedingt aufgenommen werden kann, so daß dort die Gefahr von Verformungen besteht.

Um dem zu begegnen, ist es zweckmäßig, daß der Ringraum zwischen Stahlrohr und Kunststoffmantel eine zusätzliche Aussteifung aufweist. Diese Aussteifung kann durch wenigstens einen im wesentlichen radial gerichteten Stützkörper gebildet sein, der zweckmäßig an dem dem Medienrohr zugewandten Ende des jeweiligen Endstückes eingesetzt ist.

Zur Ausbildung des Stützkörpers kann vorgesehen sein, daß er aus jeweils zu Stahlrohr und Kunststoffmantel parallelen Rohrhülsen besteht, und daß die Rohrhülsen durch radiale Stege miteinander verbunden sind, wobei es ausreicht, daß wenigstens drei Stege gleichmäßig über den Umfang der Rohrhülsen verteilt angeordnet sind. Um hier die Montage zu erleichtern, ist es vorteilhaft, daß die Rohrhülsen an ihrer dem Mediumrohr abgewandten Seite schneidenförmig ausgebildet sind, so daß sie sich leicht in den Zwischenraum zwischen Stahlrohr und Kunststoffmantel eindrücken lassen.

Eine andere Möglichkeit besteht darin, daß die Aussteifung durch in die Wärmedämmschicht integrierte Festkörper gegeben ist, der Dämmschicht also insgesamt eine höhere Widerstandsfähigkeit gegeben wird.

Weitere Einzelheiten der Erfindung ergeben sich aus der nachfolgenden Beschreibung von Ausführungsformen, die auf der Zeichnung dargestellt sind. In der Zeichnung zeigen:
- Fig. 1: die prinzipielle, teilweise geschnittene Ansicht eines gebogenen Kompensationselementes und
- Fig. 2 bis 18: Ausführungsformen des erfindungsgemäßen Kompensationselementes in vereinfachter und teilweise geschnittener Ansicht.

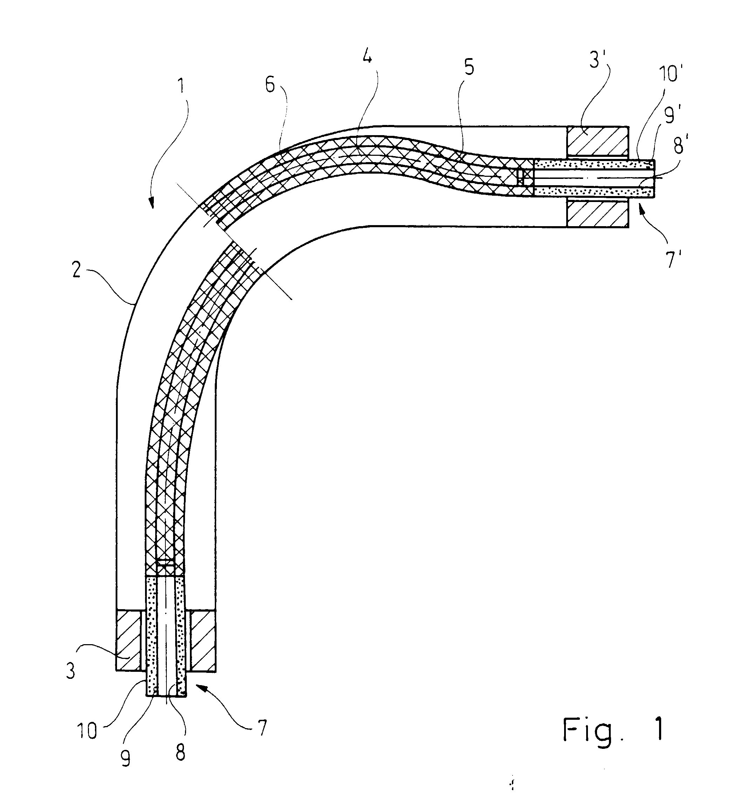

Fig. 1 zeigt ein insgesamt mit 1 bezeichnetes Kompensationselement. Dieses weist ein Hüllrohr 2 mit starren Endstücken 3, 3' auf, wobei das Hüllrohr 2 als biegbares Hüllrohr ausgebildet ist beispielsweise in Form eines Wellrohres oder eines gewickelten Schlauches.

Innerhalb des Hüllrohres ist ein Mediumrohr 4 angeordnet. Das Mediumrohr 4 ist von einer Wärmedämmschicht 5 umgeben und im übrigen ebenfalls als biegbares Leitungselement in Form eines Wellschlauches, Wickelschlauches oder dergleichen ausgebildet. Zur Abstützung von am Mediumrohr auftretenden Axialkräften ist dieses außerdem innerhalb der Wärmedämmschicht 5 von einem Geflechtsschlauch 6 umgeben.

Das Mediumrohr 4 hat Endstücke 7, 7', die als Kunststoffmantelrohrstücke ausgebildet sind und ein inneres Stahlrohr 8, 8', eine dieses umgebende Wärmedämmschicht 9, 9' aus Verbundschaum und einen äußeren Kunststoffmantel 10, 10' aufweisen. Die Endstücke 7, 7' des Mediumrohres 4 sind innerhalb der Endstücke 3, 3' des Hüllrohres 2 axial verschiebbar geführt. Mit den als Kunststoffmantelrohrstücke ausgebildeten Endstücken 7, 7' ist das Kompensationselement an nicht dargestellte, weiterführende Kunststoffmantelrohrleitungen angeschlossen.

Wie aus Fig. 1 ersichtlich, nimmt das Mediumrohr 4 je nach bestehender Temperaturbelastung und je nach wärmedehnungsbedingter Stellung der Endstücke 7, 7' innerhalb des Hüllrohres 2 unterschiedliche Positionen ein, wobei in Fig. 1 die linke, untere Hälfte die Lage des Mediumrohres 4 bei kaltem Zustand und die rechte obere Hälfte die Lage des Mediumrohres 4 bei warmem Zustand zeigt. Diese Darstellung macht auch deutlich, daß das Mediumrohr 4 wärmedehnungsbedingt im wesentlichen eine Bewegung innerhalb des durch das Kompensationselement 1 gegebenen Krümmungsbogens ausführt, die bezüglich des Krümmungsbogens in dessen Radialrichtung verläuft und in dieser Richtung den meisten Platz beansprucht. Daher ist auch zweckmäßig der Krümmungsbogen des Kompensationselementes bei der Herstellung bzw. beim Einbau so ausgerichtet, daß das Mediumrohr 4 in kaltem Zustand auf der Innenseite des den Bogen bildenden Hüllrohres 2 anliegt.

Im übrigen ist aber, wie ersichtlich, das Mediumrohr 4 innerhalb des Hüllrohres 2 zwischen seinen Endstücken 7, 7' frei beweglich, unterliegt dort also insbesondere keinen eine Rückstellkraft aufbauenden Zwängen.

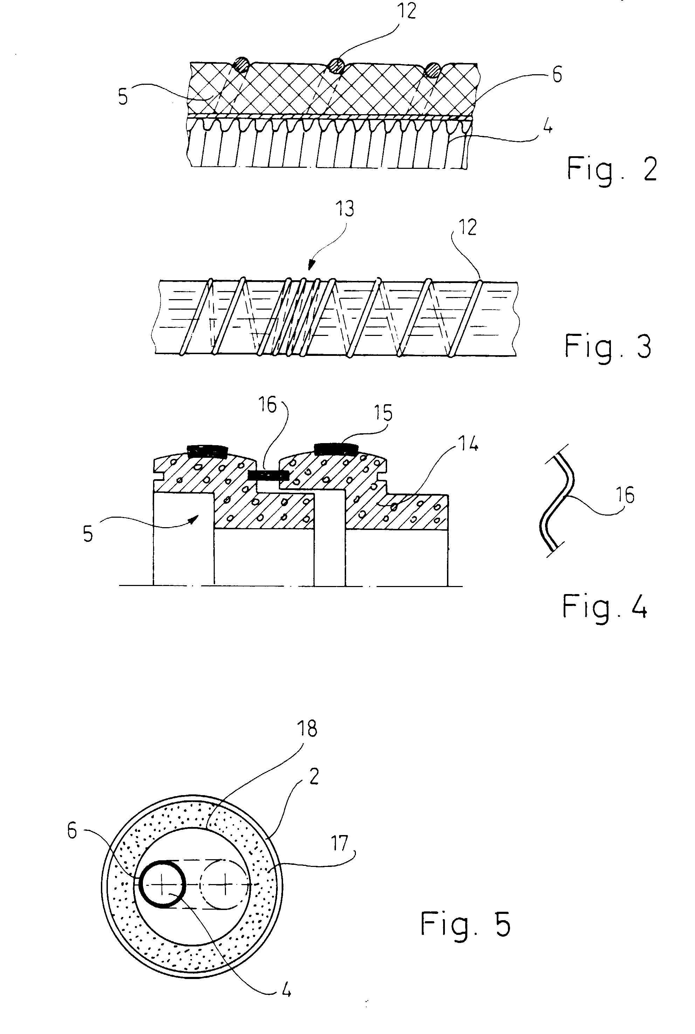

Um nun andererseits aber die freie Beweglichkeit des Mediumrohres 4 bezüglich verschleißgefährdeter Wärmedämmschicht einerseits sowie Verlauf der wärmedehnungsbedingten Bewegung andererseits zu steuern, sind zahlreiche Möglichkeiten vorgesehen, die im Prinzip anhand der Fig. 2 bis 16 nachfolgend erläutert werden.

So zeigt Fig. 2 einen kurzen Teil des Mediumrohres 4 im axialen Halbschnitt, wobei die Geflechtsummantelung 6 sowie die diese umgebende Wärmedämmschicht 5 ersichtlich ist. Das Mediumrohr 4 ist im vorliegenden Falle als Wellschlauch ausgebildet.

Außerdem ist die Wärmedämmschicht 5 mit einem Verschleißschutz in Form einer Schraubengangwendel 12 umgeben, die schlußendlich in Berührung mit dem Hüllrohr 2 gemäß Fig. 1 tritt und dadurch verhindert, daß die Wärmedämmschicht 5 bei Bewegungen des Mediumrohres 4 abgerieben oder sonstwie beeinträchtigt wird. Um hier an Stellen besonderen Verschleißes insbesondere in der Mitte des aus Fig. 1 ersichtlichen Bogens weitere, besondere Vorkehrungen zu treffen, ist die Schraubengangwendel 12 dort enger gewickelt, wie dies aus Fig. 3 bei 13 ersichtlich ist.

Wie Fig. 4 zeigt, besteht eine andere Möglichkeit darin, die Wärmedämmschicht 5 durch schuppenförmig miteinander in Eingriff befindliche Ringe 14 zu bilden, die an ihrer dem benachbarten Bauteil, im vorliegenden Falle dem Hüllrohr 2 zugewandten Oberfläche mit einem Verschleißschutz 15 ausgestattet sind, der im vorliegenden Falle aus auf die Ringe 14 an deren Außenseite aufgesetzten bzw. dort in diese eingesetzten Ringen aus Metall oder einem anderen verschleißfesten Material besteht.

Fig. 4 zeigt ersichtlich nur in vereinfachter, ausschnittweiser Form den Aufbau der Wärmedämmschicht 5 unter Fortlassung des darinnen angeordneten Mediumrohres 4 zusammen mit dessen Umflechtung 6. Außerdem ist erkennbar, daß die einzelnen Ringe 14 durch schlangenförmig verlaufende Federelemente 16 miteinander in Verbund gebracht sind, um bei Krümmungsbewegungen des Mediumrohres 4 in Axialrichtung gegeneinander arbeiten zu können.

Die Fig. 2 bis 4 zeigen Beispiele anhand des Mediumrohres 4. In umgekehrter Weise sind die gleichen Maßnahmen Selbstverständlich auch so vorsehbar, daß das Hüllrohr 2 mit einer Wärmedämmschicht ausgekleidet ist, innerhalb derer dann der anhand der Fig. 2 bis 4 beschriebene Abriebschutz angeordnet werden kann, um mit der Geflechtsummantelung des Mediumrohres 4 in Berührung zu treten.

Fig. 5 zeigt ein Beispiel für ein mit einer Wärmedämmschicht 17 ausgekleidetes Hüllrohr 2 und einer in die Wärmedämmschicht 17 eingesetzten Schraubengangwendel 18, gegenüber der das Mediumrohr 4 mit seiner Umflechtung 6 beweglich und in Anlage ist.

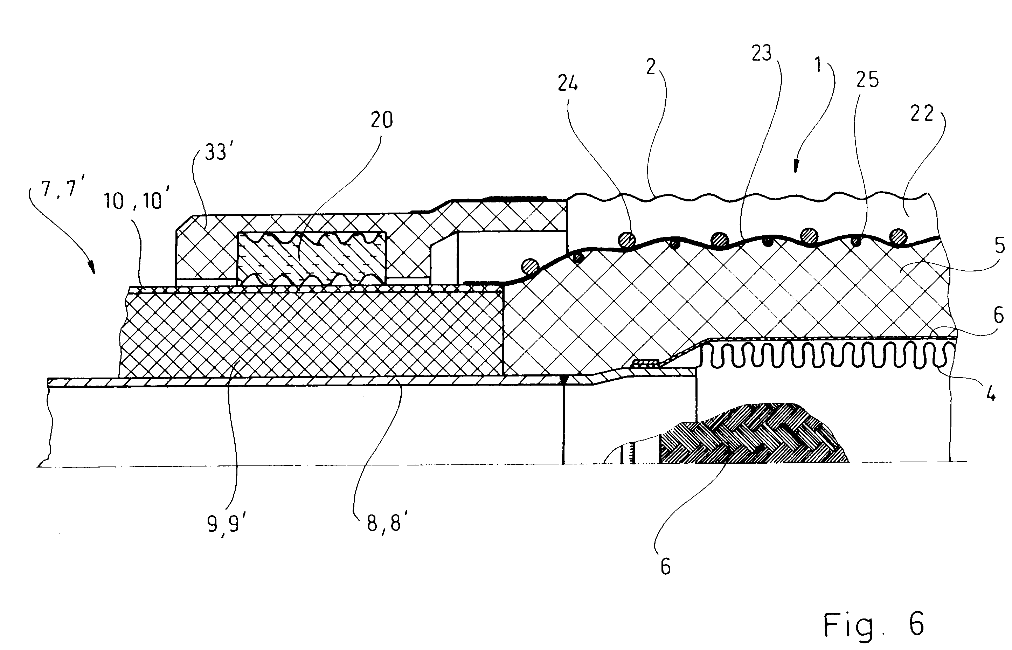

Die Fig. 6 bis 9 zeigen einen den Fig. 2 bis 4 vergleichbaren Gegenstand, wobei unter Verwendung der bisherigen Bezugszeichen zur Vermeidung von Wiederholungen auf die vorstehende Beschreibung verwiesen wird.

Fig. 6 zeigt dabei insbesondere das Kompensationselement 1 im Bereich der Endstücke 3, 3', 7, 7', wobei ersichtlich ist, daß das Hüllrohr 2 über eine abdichtende Verbindung 20 auf dem Kunststoffmantel 10, 10' der Endstücke 7, 7' sitzt. Um diese Dichtwirkung gegenüber dem Dehnraum 22 zwischen Wärmedämmschicht 5 und Hüllrohr 2 fortzusetzen, ist eine Manschette 23 über die Wärmedämmschicht 5 des Mediumrohres 4 gezogen, außerhalb derer eine Schraubengangwendel 24 angeordnet ist, die hinsichtlich Aufbau und Wirkung der Schraubengangwendel 12 gemäß Fig. 2 bis 4 entspricht. Damit unter der Wirkung der Schraubengangwendel 24 die Manschette 23 nicht zu tief in das Material der Wärmedämmschicht 5 eindringt, sind zwischen den Umläufen der Schraubengangwendel 24 innerhalb der Manschette 23 die Gänge einer Stützwendel 25 angeordnet, die die Manschette 23 auf dem Außenformat der Wärmedämmschicht 5 halten.

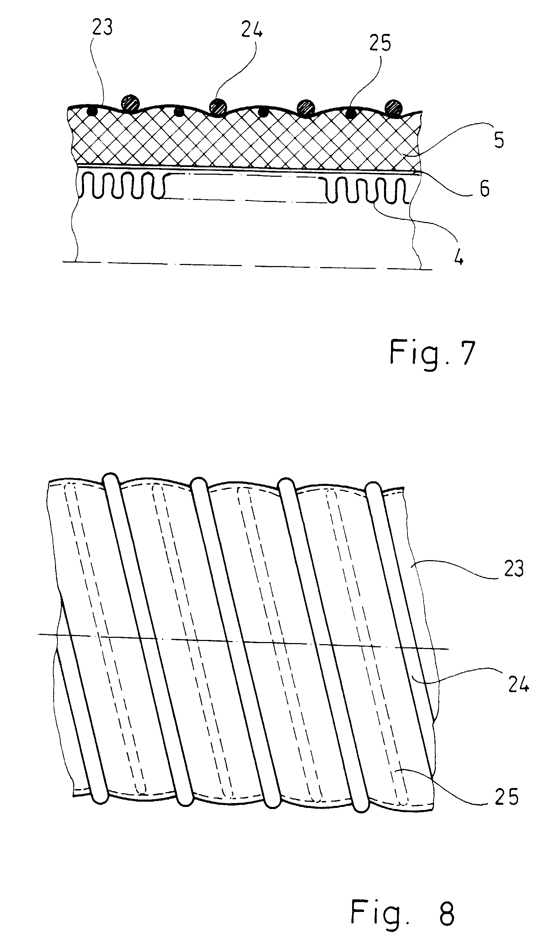

Fig. 7 zeigt noch einmal einen radialen Schnittausschnitt des Mediumrohres gemäß der Darstellung rechts in Figur 6. Fig. 8 zeigt dazu eine Außenansicht.

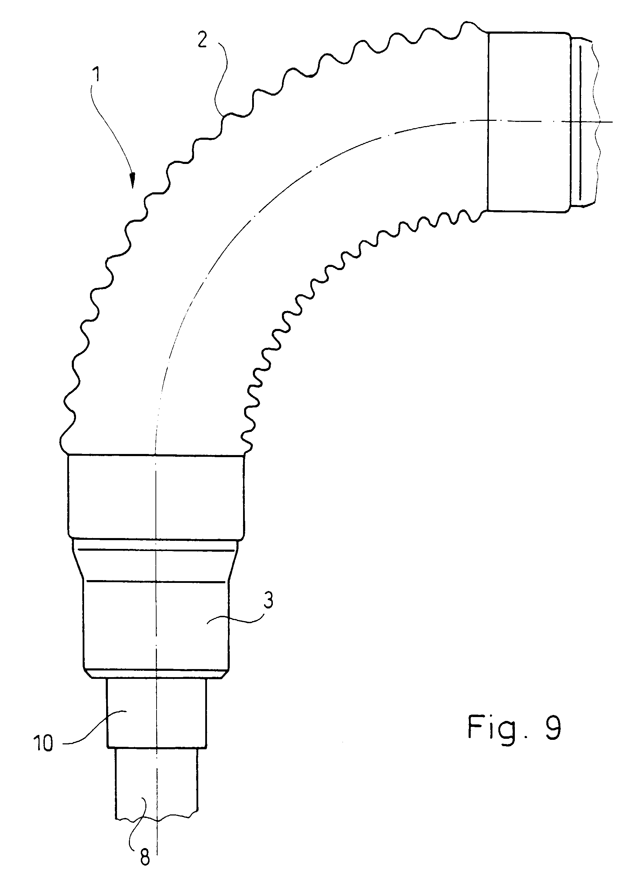

Fig. 9 zeigt die Außenansicht des Gegenstandes gemäß Fig. 6 ergänzt auf den ganzen Bogen des Kompensationselementes, wobei insbesondere ersichtlich ist, daß das Hüllrohr 2 als Wellschlauch bzw. Wellrohr ausgebildet ist.

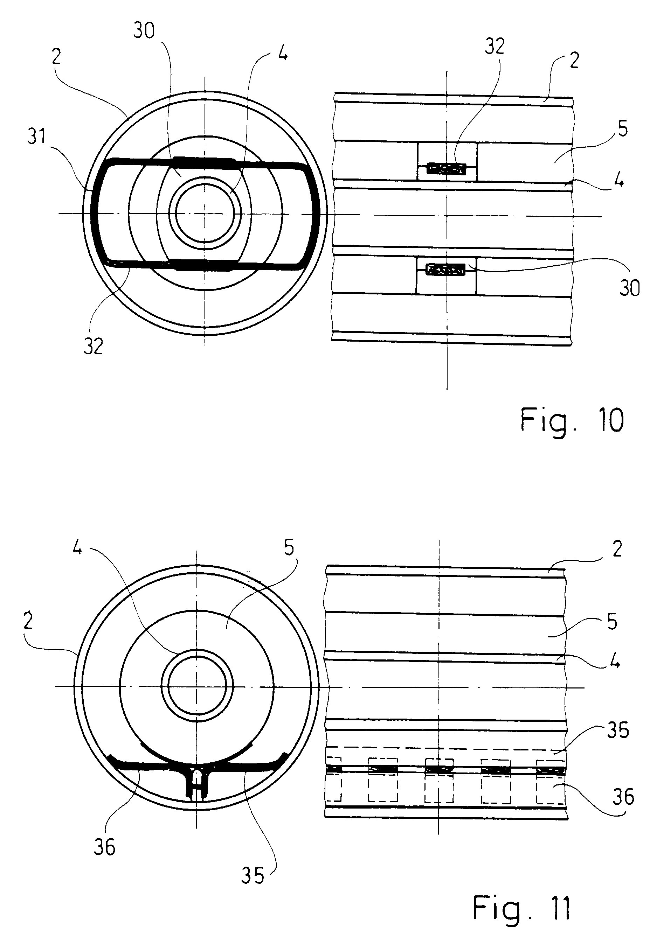

Die Fig. 10 bis 15 zeigen in Ergänzung zu den bisherigen Darstellungen Möglichkeiten der Bewegungsbeeinflussung des Mediumrohres 4.

So ist gemäß Fig. 10 auf das Mediumrohr 4 - natürlich einschließlich dessen Geflechtsummantelung - wenigstens im Bereich der Mitte des aus Fig. 1 ersichtlichen Bogens ein Kulissenteil 30 aufgesetzt, welches in einer Kulisse 31 gleitend geführt ist, die durch einen in das Hüllrohr 2 eingesetzten Bügel mit in Radialrichtung des Bogens gehenden Schenkein 32 gebildet ist.

Auf diese Weise wird das Mediumrohr 4 in Radialrichtung des aus Fig. 1 ersichtlichen Bogens entlang der Schenkel 32 sauber verschiebbar geführt, ohne daß dabei die Wärmedämmschicht 5 eine Beeinträchtigung erfahren könnte und ohne daß sich Rückstellkräfte bezüglich der wärmedehnungsbedingten Bewegungen des Mediumrohres 4 einstellen könnten.

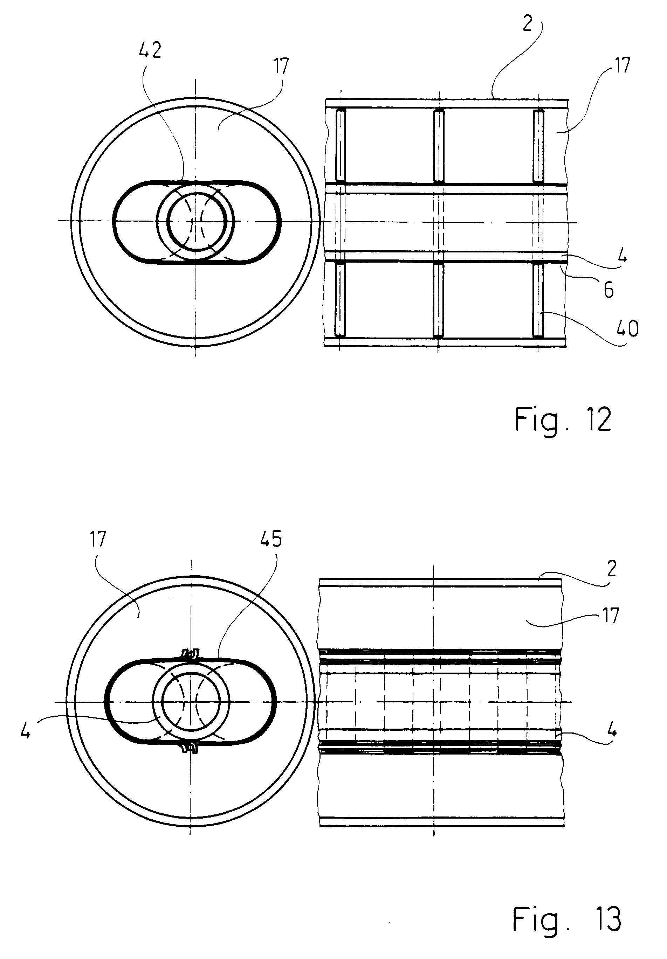

Auf dem gleichen Gedanken beruht der Gegenstand gemäß Fig. 11. Dort ist das Mediumrohr 4 zusammen mit seiner Wärmedämmschicht 5 über eine Gleitschale 35 auf einer in das Hüllrohr 2 eingesetzten Auflage 36 in Radialrichtung des Bogens gemäß Fig. 1 verschiebbar gelagert.

Gemäß Fig. 12 ist vorgesehen, daß innerhalb des Hüllrohres 2 eine Wärmedämmschicht 17 (siehe vergleichsweise Fig. 5) angeordnet ist, die von im axialen Abstand angeordneten Kulissenteilen 40 unterbrochen ist, welche in Radialrichtung des aus Fig. 1 ersichtlichen Bogens eine ovale Führungsöffnung 42 bilden, innerhalb derer das Mediumrohr 4 zusammen mit seiner Umflechtung 6 in Radialrichtung des aus Fig. 1 ersichtlichen Bogens gleiten kann.

Fig. 13 zeigt hierzu eine Variante, gemäß der innerhalb der Wärmedämmschicht 17 Bügel 45 angeordnet sind, die entsprechend den Kulissenteilen 40 aus Fig. 12 die Führung des Mediumrohres 4 übernehmen.

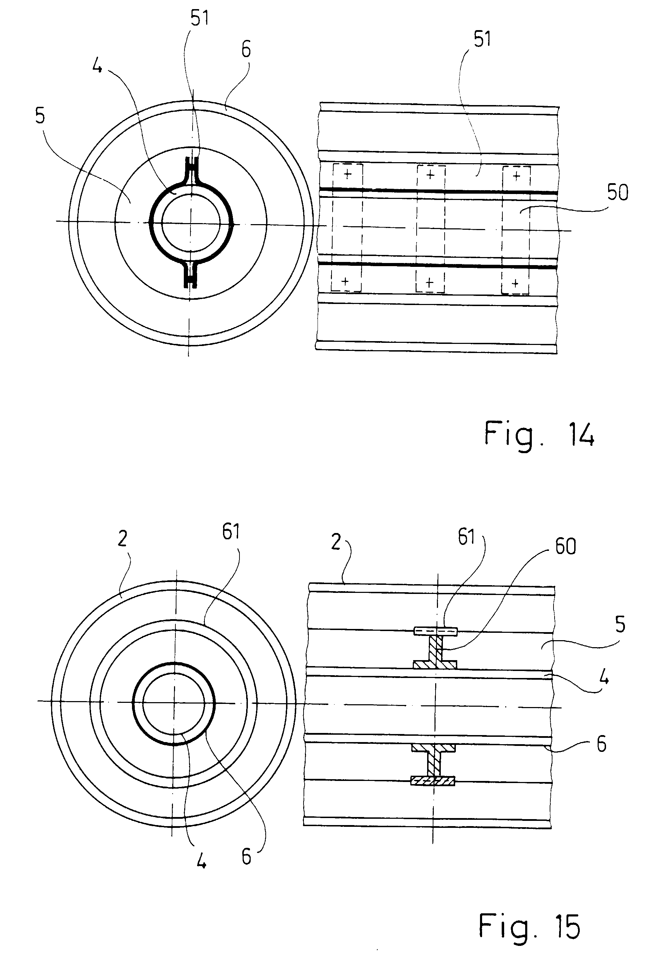

Eine andersartige Variante zeigt Fig. 14. Hier ist das Mediumrohr 4 mit Schellen 50 ausgerüstet, die in der Biegeebene gemäß Fig. 1 des Mediumrohres 4 über flexible Streifen oder Bänder 51 miteinander verbunden sind, die dafür sorgen, daß sich das Mediumrohr 4 nur in Radialrichtung des aus Fig. 1 ersichtlichen Bogens des Kompensationselementes 1 bewegen kann. Damit bleibt jede Berührung zwischen Hüllrohr 2 und Wärmedämmschicht 5 des Mediumrohres 4 so lange vermieden, wie diese Teile nicht aufgrund ihrer wärmedehnungsbedingten Bewegungen in den Extremlagen aneinanderstoßen.

Fig. 15 zeigt eine weitere Variante dahingehend, daß in die Wärmedämmschicht 5 des Mediumrohres 4 in axialen Abständen Distanzscheiben 60 eingesetzt sind, die nach radial innen auf dem Mediumrohr 4 sitzen. Diese Distanzscheiben können aus verschleißfestem Material bestehen und somit bei wärmedehnungsbedingten Bewegungen des Mediumrohres 4 die Wärmedämmschicht 5 gegen Verschleiß schützen. Um hier die gegenseitige Berührung zwischen Distanzscheiben 60 einerseits und Hüllrohr 2 andererseits noch reibungsfreier zu gestalten, können die Distanzscheiben in der hier vereinfacht dargestellten Weise außen von Kontaktringen 61 umgeben sein, die auf den Distanzscheiben 60 drehbar angeordnet sind.

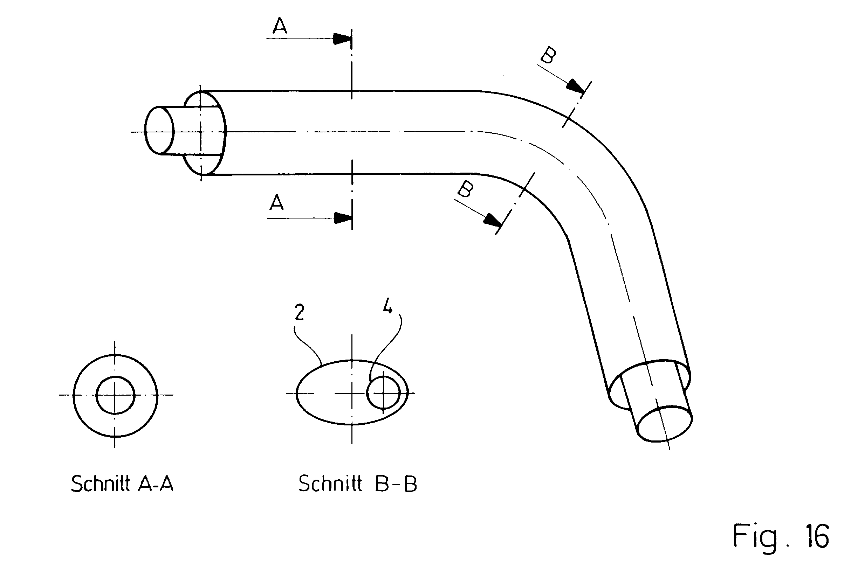

Schließlich zeigt Fig. 16 noch eine grundsätzlich für alle vorstehenden Ausführungsformen geltende Möglichkeit der Platzersparnis und Kostenreduzierung dadurch, daß das Hüllrohr 2 im Bereich des aus Fig. 1 und auch aus Fig. 16 ersichtlichen Bogens als Rohr mit ovalem Querschnitt ausgebildet ist, wobei die Lage der größeren Querschnittsachse in Radialrichtung des Bogens angeordnet ist. Auf diese Weise ist, wie insbesondere der Schnitt B-B zeigt, für das Mediumrohr 4 der nötige, wärmedehnungsbedingte Bewegungsspielraum geschaffen, ohne daß auf der anderen Seite das Hüllrohr 2 neben diesem Bewegungsspielraum unnötigen Platz in Anspruch nimmt.

Fig. 16 zeigt zusammen mit den Schnittansichten A-A und B-B nur eine schematisch vereinfachte Darstellung. Hier muß man sich selbstverständlich die Ergänzung durch die Wärmedämmaterialien etc. vorstellen.

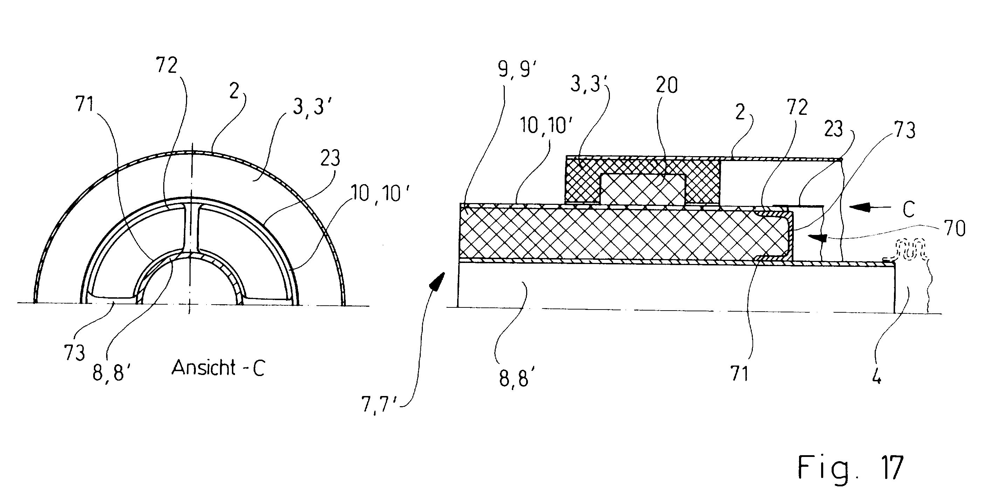

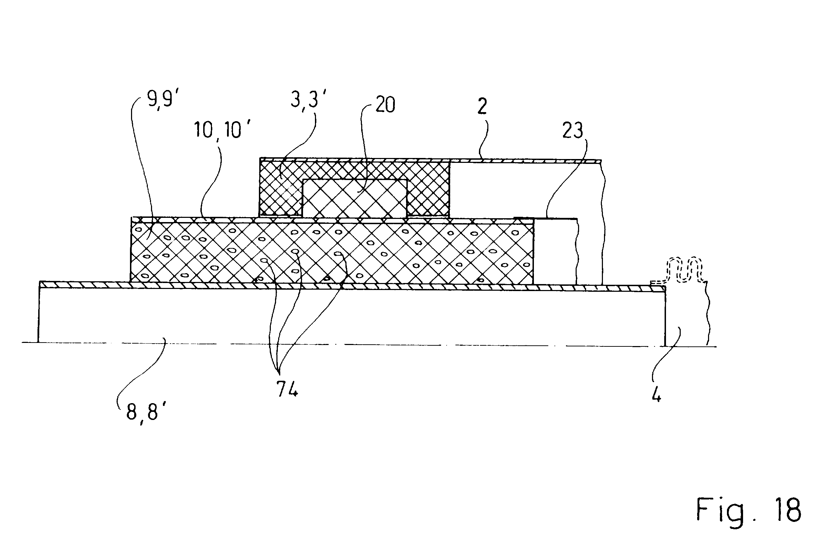

Die Fig. 17 und 18 zeigen anhand eines Endabschnittes des Kompensationselementes, der dem linken Ende der Darstellung in Fig. 6 entspricht, zwei weitere Gegenstände, die im Rahmen des neuen Kompensationselementes dessen Gebrauchseigenschaften verbessern. Bei der Darstellung der Fig. 17 und 18 werden wieder die bereits früher verwendeten Bezugszeichen benutzt, soweit vergleichbare Teile wiederkehren.

In Ergänzung zeigt Fig. 17, daß in die dem Mediumrohr 4 zugewandte Stirnseite des Endstückes 7, 7' ein Stützkörper 70 zur gegenseitigen radialen Abstützung von Stahlrohr 8, 8' und Kunststoffmantel 10, 10' eingesetzt ist. Dieser Stützkörper besteht aus jeweils zu Stahlrohr und Kunststoffmantel parallelen Rohrhülsen 71 und 72, die durch radiale Stege 73 miteinander verbunden sind, wobei im vorliegenden Falle vier Stege gleichmäßig über den Umfang verteilt angeordnet sind. Dadurch wird die radiale Distanz zwischen Stahlrohr 8, 8' und Kunststoffmantel 10, 10' ausgesteift, so daß beim Biegen des Kompensationselementes die Wärmedämmschicht 9, 9' nicht deformiert werden kann. Selbstverständlich kann es ebenso zweckmäßig sein, einen weiteren Stützkörper der beschriebenen Art auch von bezogen auf die Zeichnung links in das Endstück 7, 7' einzustecken.

Wie aus der Zeichnung ersichtlich, sind die Rohrhülsen 71, 72 an ihrer dem Mediumrohr 4 abgewandten Seite schneidenförmig angephast, um die Montage zu erleichtern.

Eine andere Möglichkeit der Verbesserung der Abstützung zwischen Stahlrohr 8, 8' und Kunststoffmantel 10, 10' zeigt Fig. 18. Hier ist die Wärmedämmschicht 9, 9' mit in das Material integrierten Festkörpern 74 versehen, die der Wärmedämmschicht eine höhere Festigkeit verleihen, wobei die Steigerung der Festigkeit über die Menge der integrierten Festkörper 74 gesteuert werden kann.

Selbstverständlich kann die Aussteifung auch dadurch vorgenommen werden, daß für die Wärmedämmschicht 9, 9' ein geeignetes, in sich festeres Material gewählt wird.

## Patentansprüche

1. Kompensationselement für Kunststoffmantelrohrleitungen zur Aufnahme von wärmedehnungsbedingten Längenänderungen und Richtungsänderungen bei vorzugsweise erdverlegten, insbesondere nicht biegbaren Mantelrohrleitungen, wobei das Kompensationselement aus einem biegbaren, einen Dehnraum umfassenden Hüllrohr, einem darin radial und axial beweglich gelagerten, biegbaren Mediumrohr sowie Endstücken besteht und wobei das Mediumrohr mit einer Wärmedämmschicht umgeben und/oder das Hüllrohr mit einer Wärmedämmschicht ausgekleidet ist,
dadurch gekennzeichnet,
daß das biegbare Mediumrohr (4) nur über seine weitgehend starren Endstücke (7, 7') gegenüber dem Hüllrohr (2) mit seinen Endstücken (3, 3') radial und angular festgelegt ist, und daß das Mediumrohr im Bereich zwischen diesen Endstücken zumindest in einer Radialrichtung ungehindert innerhalb des Hüllrohres beweglich ist.

2. Kompensationselement nach Anspruch 1,
dadurch gekennzeichnet,
daß das Mediumrohr (4) mit einer Axialabstützung versehen ist.

3. Kompensationselement nach Anspruch 2,
dadurch gekennzeichnet,
daß die Axialabstützung durch eine Geflechtsummantelung (6) des Mediumrohres (4) gegeben ist.

4. Kompensationselement nach Anspruch 1,
dadurch gekennzeichnet,
daß bei im Bogen oder S-förmig verlegtem Kompensationselement (1) bei dessen kaltem Zustand das Mediumrohr (4) unter Zwischenlage der Wärmedämmschicht (5) am jeweiligen Innenbogen des Hüllrohres (2) wenigstens praktisch in Anlage ist.

5. Kompensationselement nach Anspruch 1,
dadurch gekennzeichnet,
daß die Wärmedämmschicht (5) des Mediumrohres (4) bzw. des Hüllrohres (2) mit einem Verschleißschutz (12, 15, 24) gegenüber dem benachbarten Bauteil versehen ist.

6. Kompensationselement nach Anspruch 5,
dadurch gekennzeichnet,
daß der Verschleißschutz (12) eine auf die Wärmedämmschicht (5) aufgebrachte bzw. in diese eingesetzte Schraubengangwendel aus Metall oder Kunststoff ist.

7. Kompensationselement nach Anspruch 6,
dadurch gekennzeichnet,
daß die Wendel (12, 24) an Stellen (13) der Berührung zwischen Mediumrohr (4) und Hüllrohr (2) enger gewickelt ist als über ihren weiteren Längenbereich.

8. Kompensationselement nach Anspruch 5,
dadurch gekennzeichnet,
daß die Wärmedämmschicht (5) des Hüllrohres (2) bzw. des Mediumrohres (4) durch schuppenförmig miteinander in Eingriff befindliche Ringe (14) gebildet ist, und daß die Ringe an ihrer dem benachbarten Bauteil zugewandten Oberfläche mit einem Verschleißschutz (15) ausgestattet sind.

9. Kompensationselement nach Anspruch 4,
dadurch gekennzeichnet,
daß das Mediumrohr (4) in Radialrichtung eines Bogens des Kompensationselementes (1) bzw. des Hüllrohres (2) geführt beweglich ist.

10. Kompensationselement nach Anspruch 9,
dadurch gekennzeichnet,
daß auf das Mediumrohr (4) wenigstens ein Kulissenteil (30) im Bereich des Scheitels eines Hüllrohrbogens aufgesetzt ist, welches in einer Kulisse (31) gleitend geführt ist, die durch einen in das Hüllrohr (2) eingesetzten Bügel mit in Radialrichtung des Bogens gehenden Schenkeln (32) gebildet ist.

11. Kompensationselement nach Anspruch 9,
dadurch gekennzeichnet,
daß das Mediumrohr (4) gegebenenfalls zusammen mit der es umhüllenden Wärmedämmung (5) auf einer in das Hüllrohr (2) eingesetzten Auflage (36) mit Gleitfläche in Radialrichtung des Bogens verschiebbar gelagert ist.

12. Kompensationselement nach Anspruch 9,
dadurch gekennzeichnet,
daß in das Hüllrohr (2) wenigstens im Bereich des Bogens ein Kulissenteil (40) eingesetzt ist, über dessen in Radialrichtung des Bogens gerichtete Kanten das Mediumrohr gleitend geführt ist.

13. Kompensationselement nach Anspruch 9,
dadurch gekennzeichnet,
daß am Mediumrohr (4) über dessen Längserstreckung nur in der Biegebene biegbare Streifen (51) aus Metall oder dergleichen vorzugsweise auf beiden Seiten des Mediumrohres befestigt sind.

14. Kompensationselement nach Anspruch 9,
dadurch gekennzeichnet,
daß auf das Mediumrohr (4) bzw. in das Hüllrohr (2) wenigstens im Bereich des Scheitels eines Bogens eine radial gerichtete Distanzscheibe (60) aus verschleißfestem Material mit die Wärmedämmschicht (5) überbrückender, radialer Erstreckung eingesetzt ist.

15. Kompensationselement nach Anspruch 14,
dadurch gekennzeichnet,
daß um die Distanzscheibe (60) ein Kontaktring (61) drehbar angeordnet ist.

16. Kompensationselement nach einem der vorhergehenden Ansprüche,
dadurch gekennzeichnet,
daß das Hüllrohr (2) im Bereich eines Bogens einen ovalen Querschnitt mit Lage der größeren Querschnittsachse in Radialrichtung des Bogens aufweist.

17. Kompensationselement nach Anspruch 1,
dadurch gekennzeichnet,
daß das jeweilige Endstück (7, 7') des Mediumrohres (4) ein Kunststoffmantelrohrstück ist mit einem inneren Stahlrohr (8, 8'), einer dieses umgebenden Wärmedämmschicht (9, 9') aus Verbundschaum und einem äußeren Kunststoffmantel (10, 10').

18. Kompensationselement nach Anspruch 17,
dadurch gekennzeichnet,
daß der Ringraum zwischen Stahlrohr (8, 8') und Kunststoffmantel (10, 10') eine zusätzliche Aussteifung aufweist.

19. Kompensationselement nach Anspruch 18,
dadurch gekennzeichnet,
daß die Aussteifung durch wenigstens einen im wesentlichen radial gerichteten Stützkörper (70) gebildet ist.

20. Kompensationselement nach Anspruch 19,
dadurch gekennzeichnet,
daß der Stützkörper (70) an dem dem Mediumrohr (4) zugewandten Ende des Endstückes (7, 7') eingesetzt ist.

21. Kompensationselement nach Anspruch 20,
dadurch gekennzeichnet,
daß der Stützkörper (70) aus jeweils zu Stahlrohr (8, 8') und Kunststoffmantel (10, 10') parallelen Rohrhülsen (71, 72) besteht, und daß die Rohrhülsen durch radiale Stege (73) miteinander verbunden sind.

22. Kompensationselement nach Anspruch 21,
dadurch gekennzeichnet,
daß wenigstens drei Stege (73) gleichmäßig über den Umfang der Rohrhülsen (71, 72) verteilt angeordnet sind.

23. Kompensationselement nach Anspruch 21,
dadurch gekennzeichnet,
daß die Rohrhülsen (71, 72) an ihrer dem Mediumrohr (4) abgewandten Seite schneidenförmig angephast sind.

24. Kompensationselement nach Anspruch 18,
dadurch gekennzeichnet, daß die Aussteifung durch in die Wärmedämmschicht (9,9') integrierte Festkörper (74) gegeben ist.

## Claims

1. Compensation element for plastic coated pipelines for the absorption of changes in length and direction in preferably ground-laid, and in particular inflexible, coated piplines, said changes being caused by thermal expansions in which the compensation element consists of a flexible outer pipe encompassing an expansion space, a flexible media-converting pipe supported therein in radially and axially movable manner, and end-pieces, and in which the media-conveying pipe is surrounded by a thermal insulation layer and/or the outer pipe is lined with a thermal insulation layer,
characterised in that
the flexible media-conveying pipe (4) is radially and angularly secured with respect to the end pieces (3, 3') of the outer pipe (2) solely by way of its largely rigid end-pieces (7, 7'), and in that the media-conveying pipe in the region between said end-pieces can move freely in at least a radial direction within the outer pipe.

2. Compensation element according to Claim 1, characterised in that the media-conveying pipe (4) is axially braced.

3. Compensation element according to Claim 2, characterised in that the axial bracing is provided by means of a woven sheath (6) of the media-conveying pipe (4).

4. Compensation element according to Claim 1, characterised in that, when the compensation element (1) is laid with a bend or in an S-shape, in its cold state the media-conveying pipe (4) at least just about bears upon the respective inner bend of the outer pipe (2), the thermal insulation layer (5) being interposed therebetween.

5. Compensation element according to Claim 1, characterised in that the thermal insulation layer (5) of the media-conveying pipe (4) or of the outer pipe (2) is provided with a protection against wear (12, 15, 24) with respect to the adjacent member.

6. Compensation element according to Claim 5, characterised in that the protection against wear (12) is a screw-thread spiral mounted on or set into the thermal insulation layer (5), the spiral being composed of metal or plastic.

7. Compensation element according to Claim 6, characterised in that the spiral (12, 24) is more tightly wound at points (13) of contact between the media-conveying pipe (4) and the outer pipe (2) than over the rest of its length.

8. Compensation element according to Claim 5, characterised in that the thermal insulation layer (5) of the outer pipe (2) or of the media-conveying pipe (4) is formed by rings (14) which engage each other in scale-like manner, and in that the rings at their surface facing the adjacent member are equipped with a protection against wear (15).

9. Compensation element according to Claim 4, characterised in that the media-conveying pipe (4) can move in a guided manner in the radial direction of a bend of the compensation element (1) or of the outer pipe (2).

10. Compensation element according to Claim 9, characterised in that at least one slot-plate member (30) is laid onto the media-conveying pipe (4) in the region of the crown of a bend of the outer pipe, said slot-plate member being slidably guided in a slot plate (31) formed by a shackle inserted into the outer pipe (2), said shackle having limbs (32) extending in a radial direction of the bend.

11. Compensation element according to Claim 9, characterised in that the media-conveying pipe (4), where required together with the thermal insulation (5) enveloping said media-conveying pipe, is movably supported in the radial direction of the bend on a seat (36) inserted into the outer pipe (2), said seat (36) having a sliding surface.

12. Compensation element according to Claim 9, characterised in that a slot-plate member (40) is inserted into the outer pipe (2) at least in the region of the bend, the media-conveying pipe being slidably guided by way of the edges of the slot-plate member which are orientated in the radial direction of the bend.

13. Compensation element according to Claim 9, characterised in that strips (51) which are flexible only in the plane of the bend and are composed of metal or the like are attached to the media-conveying pipe (4) on both sides thereof along its length.

14. Compensation element according to Claim 9, characterised in that a radially directed spacing disk (60) of wear-resistant material is fitted onto the media-conveying pipe (4) or into the outer pipe (2) at least in the region of the crown of a bend, said spacing disk having a radial extent bridging the thermal insulation layer (5).

15. Compensation element according to Claim 14, characterised in that a contact ring (61) is rotatably disposed around the spacing disk (60).

16. Compensation element according to any one of the preceding claims, characterised in that the outer pipe (2) in the region of a bend has an oval cross-section, the larger cross-sectional axis lying in the radial direction of the bend.

17. Compensation element according to Claim 1, characterised in that the respective end piece (7, 7') of the media-conveying pipe (4) is a plastic coated pipe piece having an inner steel pipe (8, 8'), a thermal insulation layer (9, 9') of composite foam surrounding said steel pipe, and an outer plastic covering (10, 10').

18. Compensation element according to Claim 17, characterised in that the annular space between the steel pipe (8, 8') and the plastic covering (10, 10') is provided with additional stiffening.

19. Compensation element according to Claim 18, characterised in that the stiffening is formed by at least one generally radially directed support body (70).

20. Compensation element according to Claim 19, characterised in that the support body (70) is fitted onto the end of the end piece (7, 7') facing the media-conveying pipe (4).

21. Compensation element according to Claim 20, characterised in that the support body (70) consists of tubular collars (71, 72) each parallel to the steel pipe (8, 8') and the plastic covering (10. 10'), and in that the tubular collars are connected to each other by means of radial bridges (73).

22. Compensation element according to Claim 21, characterised in that at least three bridges (73) are uniformally distributed over the circumference of the tubular collars (71, 72).

23. Compensation element according to Claim 21, characterised in that the tubular collars (71, 72) are chamfered to a knife-edge at their end facing away from the media-conveying pipe (4).

24. Compensation element according to Claim 18, characterised in that the stiffening is provided by solid bodies (74) integrated into the thermal insulation layer (9,9' ).

## Revendications

1. Élément de compensation pour des tuyauteries à enveloppe en matière synthétique, destiné à supporter les modifications dimensionnelles et les modifications directionnelles venant de la dilatation thermique pour des tuyauteries à enveloppe, de préférence posées dans le sol, en particulier non flexibles, l'élément de compensation étant constitué d'un tube-enveloppe flexible, enclosant une enceinte de dilatation, un tube de circulation du milieu ou fluide flexible y étant monté avec une mobilité radial et axiale ainsi que des pièces d'extrémité et le tube de circulation du milieu ou fluide étant entouré d'une couche d'isolation thermique et/ou le tube-enveloppe étant revêtu d'une couche d'isolation thermique,
caractérisé en ce que,
le tube de circulation du milieu ou fluide (4) flexible n'est fixé radialement et angulairement que par ses pièces d'extrémité (7, 7') notablement rigides vis-à-vis du tube-enveloppe (2) doté de ses pièces d'extrémité (3, 3'), et en ce que le tube de circulation du milieu ou fluide est mobile au moins dans la zone se trouvant entre ces pièces d'extrémité, de façon non entravée à l'intérieur du tube-enveloppe, au moins dans une direction radiale.

2. Élément de compensation selon la revendication 1,
caractérisé en ce que
le tube de circulation du milieu ou fluide (4) est pourvu d'un appui axial.

3. Élément de compensation selon la revendication 2,
caractérisé en ce que
l'appui axial est fourni par un gainage tressé (6) du tube de circulation du milieu ou fluide (4).

4. Élément de compensation selon la revendication 1,
caractérisé en ce que
dans le cas où l'élément de compensation (1) est posé en suivant une forme en arc ou en S, à son état froid, le tube de circulation du milieu ou fluide (4) est au moins pratiquement en appui sur l'arc intérieur respectif du tube-enveloppe (2), avec interposition de la couche d'isolation thermique (5).

5. Élément de compensation selon la revendication 1,
caractérisé en ce que
la couche d'isolation thermique (5) du tube de circulation du milieu ou fluide (4) respectivement du tube-enveloppe (2) est pourvue d'une couche d'usure (12, 15, 24) vis-à-vis d'éléments de construction voisins.

6. Élément de compensation selon la revendication 5,
caractérisé en ce que
la couche d'usure (12) est un enroulement hélicoïdal en métal ou en matière synthétique appliqué sur la couche d'isolation thermique (5) respectivement inséré dans celle-ci.

7. Élément de compensation selon la revendication 6,
caractérisé en ce que
l'enroulement (12, 24) aux endroits (13) du contact entre le tube de circulation du milieu ou fluide (4) et le tube enveloppe (12) est d'un pas plus petit que le pas qu'il présente sur le reste de sa zone longitudinale.

8. Élément de compensation selon la revendication 5,
caractérisé en ce que
la couche d'isolation thermique (5) du tube-enveloppe (2) respectivement du tube de circulation du milieu ou fluide (4) est constitué par des anneaux (14) placés en contact les uns avec les autres, en forme d'écailles, et en ce que les anneaux sont dotés, sur leur surface tournée vers l'élément de construction voisin, d'une couche d'usure (15).

9. Élément de compensation selon la revendication 4,
caractérisé en ce que
le tube de circulation du milieu ou fluide (4) est guidé avec une possibilité de mobilité dans la direction radiale d'un arc de l'élément de compensation (1) respectivement du tube-enveloppe (2).

10. Elément de compensation selon la revendication 9,
caractérisé en ce que
sur le tube de circulation du milieu ou fluide (4) est appliqué au moins une partie-coulisse (30) dans la zone du sommet d'un arc de tube-enveloppe, cette partie-coulisse étant guidée avec glissement dans une coulisse (31) constituée par un étrier inséré dans le tube-enveloppe (2) et ayant des branches (32) partant dans la direction radiale de l'arc.

11. Élément de compensation selon la revendication 9,
caractérisé en ce que
sur le tube de circulation du milieu ou fluide (4) est monté avec une possibilité de mobilité dans la direction radiale de l'arc, le cas échéant conjointement avec l'isolation thermique (5) qui l'enveloppe, sur une base (36) insérée dans le tube-enveloppe (2) et dotée d'une surface de glissement.

12. Élément de compensation selon la revendication 9,
caractérisé en ce qu'
une partie de coulissement (40), par l'intermédiaire de laquelle le tube de circulation du milieu ou fluide est guidé avec glissement sur ses arêtes orientées dans la direction radiale de l'arc, est insérée dans le tube enveloppe (2), au moins dans la zone de l'arc.

13. Élément de compensation selon la revendication 9,
caractérisé en ce que
sur l'étendue longitudinale du tube de circulation du milieu ou fluide (4), sont fixées des bandes (50) en métal ou analogue, de préférence sur les deux côtés du tube de circulation du milieu ou fluide, ces bandes ne pouvant fléchir que dans le plan de coudage.

14. Élément de compensation selon la revendication 9,
caractérisé en ce que
sur le tube de circulation du milieu ou fluide (4) respectivement dans le tube-enveloppe (2) est inséré, au moins dans la zone du sommet d'un arc, un disque d'espacement (60) dirigé radialement et réalisé en un matériau résistant à l'usure, avec une étendue radiale pontant la couche d'isolation thermique (5).

15. Élément de compensation selon la revendication 14,
caractérisé en ce qu'
un anneau de contact (61) est disposé tournant autour du disque d'écartement (60).

16. Élément de compensation selon l'une des revendications précédentes,
caractérisé en ce que
le tube-enveloppe (2) présente dans la zone d'un arc une section transversale ovale avec le grand axe de la section transversale orienté dans la direction radiale de l'arc.

17. Élément de compensation selon la revendication 1,
caractérisé en ce que
la pièce d'extrémité (7, 7') respectives du tube de circulation du milieu ou fluide (4) est une pièce tubulaire à enveloppe en matière synthétique, avec un tube en acier intérieur (8, 8') , une couche d'isolation thermique (9, 9') entourant ce tube et réalisée en un produit composite alvéolaire, et avec une enveloppe en matière synthétique extérieure (10, 10').

18. Élément de compensation selon la revendication 17,
caractérisé en ce que
l'espace annulaire compris entre le tube en acier (8, 8') et l'enveloppe en matière synthétique (10, 10') présente une rigidification supplémentaire.

19. Élément de compensation selon la revendication 18,
caractérisé en ce que
la rigidification est constituée par au moins un corps d'appui (70) orienté sensiblement radialement.

20. Élément de compensation selon la revendication 19,
caractérisé en ce que
le corps d'appui (70) est inséré sur l'extrémité, tournée vers le tube de circulation du milieu ou fluide (4) de la pièce d'extrémité (7, 7').

21. Élément de compensation selon la revendication 20,
caractérisé en ce que
le corps d'appui (70) est constitué de douilles tubulaires (71, 72), chacune parallèle au tube en acier (8, 8') et à l'enveloppe en matière synthétique (10, 10') et en ce que les douilles tubulaires sont reliées ensembles par des nervures radiales (73).

22. Élément de compensation selon la revendication 21,
caractérisé en ce qu'
au moins trois nervures (73) sont réparties régulièrement sur la périphérie des douilles tubulaires (71, 72).

23. Élément de compensation selon la revendication 21,
caractérisé en ce que
les douilles tubulaires (71, 72) sont chanfreinées en forme de tranchant, sur leur côté opposé au tube de circulation du milieu ou fluide (4).

24. Élément de compensation selon la revendication 18,
caractérisé en ce que
la rigidification est produite par des corps rigides (74) intégrés dans la couche d'isolation thermique (9,9').
